## Europäisches Patentamt

## European Patent Office

## Office européen des brevets

(19)

(11) Veröffentlichungsnummer: **0 414 070 A2**

(12) **EUROPÄISCHE PATENTANMELDUNG**

(21) Anmeldenummer: 90115431.0

(51) Int. Cl.5: **C08G 65/30**

(22) Anmeldetag: 11.08.90

(30) Priorität: 25.08.89 DE 3928151

(43) Veröffentlichungstag der Anmeldung:
27.02.91 Patentblatt 91/09

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Gupta, Pramod, Dr.**
**Langemarckstrasse 27**
**D-5012 Bedburg(DE)**
Erfinder: **Sanndhagen, Hans-Joachim, Dr.**
**Claudiusstrasse 32**
**D-4047 Dormagen 1(DE)**
Erfinder: **Rosenbaum, Heinz Jörg, Dr.**
**Sebastian-Kneipp-Weg 10**
**D-4150 Krefeld 1(DE)**

(54) **Verfahren zur Entfernung von Katalysatoren aus Polyether-Polyolen.**

(57) Die vorliegende Erfindung betrifft ein Verfahren zur Entfernung von basischen Katalysatoren aus Polyether-Polyolen, die von der Herstellung der Polyether-Polyole noch in diesen Produkten verblieben sind. Die Entfernung erfolgt durch Hydrolyse und Einleiten von $CO_2$ sowie anschließendes Abfiltrieren des gebildeten Carbonats. Zum Schluß wird der Gehalt an Restbasen durch eine Nachneutralisation mit Säuren, vorzugsweise mit Oxalsäure auf jedes gewünschte Niveau eingestellt.

EP 0 414 070 A2

# VERFAHREN ZUR ENTFERNUNG VON KATALYSATOREN AUS POLYETHER-POLYOLEN

Die vorliegende Erfindung betrifft ein Verfahren zur Entfernung von basischen Katalysatoren aus Polyether-Polyolen, die von der Herstellung der Polyether-Polyole noch in diesen Produkten verblieben sind. Die Entfernung erfolgt durch Hydrolyse und Einleiten von $CO_2$ sowie anschließendes Abfiltrieren des gebildeten Carbonats. Zum Schluß wird der Gehalt an Restbasen durch eine Nachneutralisation mit Säuren, vorzugsweise mit Oxalsäure auf jedes gewünschte Niveau eingestellt.

Die Polyoxyalkylen-Polyether-Polyole, auch Polyether-Polyole genannt, werden insbesondere für die Herstellung von Polyurethanen verwendet. Die Polyether-Polyole werden überwiegend mit Polyisocyanaten umgesetzt und geben Urethanpolymere, die entweder in Form von elastischen Massen oder halbharten oder harten Schäumen vorliegen können (vgl. z.B. EP-A-116 309, DE-AS 1 929 034, DE-OS 2 019 322, Ullmanns Encyklopädie der technischen Chemie, 1982, Bd. 19, S. 31 ff.).

Ferner sind Polyetherpolyole einsetzbar als Textilhilfsmittel, oberflächenaktive Substanzen und Hydraulikflüssigkeiten, Lackrohstoffe, Klebstoffrohstoffe, Schmier- und Gleitmittel.

Die Eigenschaften der Polyurethane hängen sehr stark von den verwendeten Polyether-Polyolen, Isocyanaten und von entsprechenden Zusatzstoffen wie z.B. Katalysatoren ab. Daher ist es notwendig, daß die Polyether-Polyole in sehr reiner Form vorliegen und weitestgehend frei von solchen Verunreinigungen sind, die als Katalysatoren bei der Polyurethanbildung wirken können.

Die großtechnische Herstellung von Polyether-Polyolen erfolgt durch die Polyadditionsreaktion von Alkylenoxiden an Startermoleküle mit aktiven Wasserstoffatomen (vgl. z.B. Ullmanns Encyklopädie der technischen Chemie, 1982, Band 19, S.31 ff.). Man erhält Polyether-Polyole mit freien Hydroxylgruppen, von denen ein Teil aufgrund des alkalischen Reaktionsmediums endständige Alkoholatgruppen trägt. In einem weiteren Schritt werden die Alkoholatgruppen in freie Hydroxylgruppen überführt. Im allgemeinen werden die alkalihaltigen Polyether-Polyole mit anorganischen oder organischen Säuren neutralisiert, wobei hydroxylgruppenhaltige Polyether-Polyole und wäßrige Salzlösungen entstehen Anschließend wird das Wasser destillativ entfernt. Die Salze werden durch Filtration von den Polyether-Polyolen getrennt.

Alternativ kann die Polyether-Polyol-Abtrennung durch Zentrifugieren und/oder Phasentrennung mit und ohne Zusatz von inerten Lösungsmitteln erfolgen.

Verwendet man für die Neutralisation anorganische Säuren wie z.B. Schwefelsäure, Phosphorsäure, Salzsäure oder Kaliumhydrogenphosphat oder organische Säuren wie z.B. Zitronensäure, Weinsäure etc. ist es notwendig, genau bis zum Äquivalenzpunkt zu neutralisieren, um auf der einen Seite ein Minimum an basischen Restalkalisalzen und auf der anderen Seite ein Minimum an Säureüberschuß zu erhalten. Ferner fällt das Alkalisalz häufig so fein aus, daß die Filtration trotz Verwendung von Filterhilfsmitteln Schwierigkeiten bereitet. Die Verwendung von starken Säuren kann zusätzlich zu Nebenreaktionen wie Veresterung, Veretherung und/oder Dehydratisierung von endständigen Hydroxylgruppen und/oder zum Abbau von Polyetherketten führen. So geschädigte Polyether weisen zusätzlich unangenehme Geruchskomponenten auf.

Eine andere Möglichkeit der Katalysatorentfernung ist z.B. (US-PS 3 715 402) die Hydrolyse des Alkoholats und anschließende Phasentrennung unter Verwendung von inerten organischen Lösungsmitteln; Unterstützung der Phasentrennung kann durch Zentrifugieren oder elektrostatische Koaleszenz erfolgen. Diese Verfahrensvariante ist jedoch begrenzt auf wasserunlösliche Polyether-Polyole.

In einer Reihe von Patentschriften (vgl z.B. DE-OS 2 208 614, US-PS 4 029 879, US-PS 4 137 396) wird die Verwendung von Mg-Silikaten als Adsorptionsmittel für die Entfernung von wäßriger KOH beschrieben.

Der hierbei anfallende Filterrückstand, bestehend aus KOH/Mg-Silikat und Polyether-Polyol ist schwierig zu handhaben und problematisch zu entsorgen. Ferner sind die Ausbeuteverluste relativ hoch.

In US-PS 3 833 669 wird unter anderem für die Entfernung von Katalysatoren (z.B. KOH, NaOH) über die Neutralisation mit $CO_2$ festgestellt, daß der Katalysator nur ungenügend neutralisiert wird und sich die Alkalicarbonate wegen sehr feiner Kristalle kaum filtrieren lassen, so daß man Polyether-Polyole erhält, die nicht den gewünschten Reinheitsgrad besitzen. In dieser Patentschrift wird der Einsatz von Mg-Carbonaten zur Bildung von schwerlöslichen Alkali-Magnesium-Carbonat-Doppelsalzen empfohlen.

Die Nachteile dieses Verfahrens sind die Handhabung des Filterrückstandes und seine Entsorgung. Weiter unbefriedigend ist die Verwendung von großen Überschüssen an $CO_2$ (2- bis 10-fach, Abgasentsorgung) und Mg-Salzen (1- bis 20-faches des Katalysatorgehaltes, Abfallentsorgung). Zusätzlich werden für die Abtrennung Filterhilfsmittel von 0,1 bis 1 % der Polyether-Polyolmengen benötigt, die eine eventuelle spätere Verwendung der Rückstände zusätzlich erschweren.

Aufgabe der vorliegenden Erfindung war es daher, ein einfaches und sicheres Verfahren zur Entfernung von Katalysatorresten aus Polyether-Polyolen bereitzustellen, das die vorgenannten Nachteile nicht aufweist.

Gegenstand der vorliegenden Erfindung ist nun ein Verfahren zur Entfernung von basischen Katalysatoren aus Polyether-Polyolen mit OH-Zahlen von 4 bis 800 durch Hydrolyse des alkalischen Alkoholats und durch Einleiten von $CO_2$ und Abfiltrieren des gebildeten Carbonats sowie eine nachfolgende Neutralisation, dadurch gekennzeichnet, daß die Hydrolyse des Alkoholats mit 0,7 bis 10 Gew.-% Wasser (bezogen auf Polyether-Polyol) bei 25 bis 140°C durchgeführt und anschließend die etwa 1- bis 2-fache stöchiometrische Menge an $CO_2$ bei einer Temperatur von 75 bis 120°C eingeleitet, das gebildete Carbonat abfiltriert und das Polyether-Polyol mit anorganischen oder organischen Säuren, vorzugsweise mit Oxalsäure, nachneutralisiert wird.

Überraschenderweise wurde gefunden, daß bei Wahl geeigneter Reaktionsbedingungen und Parameter die Entfernung von basischen Katalysatoren über die Carbonatbildung sehr gut gelingt. Die hierbei entstehenden Salze fallen wider Erwarten grobkristallin aus, so daß die Filtration, auch ohne Filterhilfsmittel, keine Probleme bereitet. Die so erhaltenen Polyether-Polyole mit OH-Zahlen von 4 bis 150, weisen Restalkaligehalte von < 10 ppm auf. Bei Polyether-Polyolen mit OH-Zahlen über 150 findet man Restalkaligehalte bis 1.000 ppm.

Überraschenderweise wurde gefunden, daß zu hohe Restalkaligehalte durch eine Nachneutralisation mit stärkeren Säuren, wie z.B. anorganischen Säuren wie Schwefelsäure oder Phosphorsäure oder organische Säuren wie z.B. Weinsäure oder Carbonsäuren, insbesondere aber mit Oxalsäure und anschließender Filtration der Salze auf jedes gewünschte Niveau abgesenkt werden können.

Zusätzlich wurde festgestellt, daß Polyether-Polyole, die ausschließlich mit $CO_2$ neutralisiert und die anschließend mit organischen Säuren nachneutralisiert wurden, praktisch geruchlos sind, im Gegensatz zu Produkten, die unter Verwendung von Mineralsäuren aufgearbeitet wurden.

Die Verwendung von gasförmigem Kohlendioxid und Carbonsäuren, insbesondere Oxalsäure, bietet folgende Vorteile:

Vermeidung unerwünschter Nebenreaktionen wie z.B. Veresterung, Dehydratisierung oder Übersäuerung, leichte Entfernung des $CO_2$-Überschusses, Gewinnung von praktisch geruchlosen Polyether-Polyolen und Verhinderung der Korrosion durch Mineralsäuren.

Die bei dem erfindungsgemäßen Verfahren anfallenden Alkalicarbonate und Alkalioxalate können in so reiner Form gewonnen werden, daß ihr Einsatz als Rohstoff, z.B. bei der Glas-, Keramik- und Emailherstellung, möglich ist.

Die Polyether-Polyole, für die das erfindungsgemäße Verfahren geeignet ist, weisen eine OH-Zahl von etwa 4 bis 800 auf. Sie werden in an sich bekannter Weise (vgl. z.B. Saunders, Frisch Polyurethanes: Chemistry and Technology Part. I, Page 32-40 (1962)) hergestellt.

Das erfindungsgemäße Verfahren wird in seiner allgemeinen Form wie folgt ausgeführt:

Das alkalische Polyadditionsprodukt wird durch Zugabe von Wasser hydrolysiert. Die Hydrolysetemperatur liegt zwischen 25 und 140°C. Anschließend wird durch Einleitung von gasförmigem Kohlendioxid der Katalyator bei Temperaturen von 75 bis 120°C neutralisiert. Die Entfernung des Carbonats erfolgt mittels Filtration und kann vor oder nach der Destillation des zugesetzten Wassers vorgenommen werden.

Nach Bestimmung des Restalkaligehalts erfolgt eine Nachneutralisation mittels Säuren, insbesondere mit Oxalsäure, eine erneute Destillation und Filtration.

Eine bevorzugte Ausführungsform der vorliegenden Erfindung ist folgende:

Das alkalische Polyadditionsprodukt wird durch Zugabe von 0,7 - 10,0 Gew.-% Wasser bei Temperaturen von 75 -120°C hydrolysiert. Die Einleitung des gasförmigen $CO_2$ erfolgt unter Rühren bei 75 - 120°C. Die verwendete Menge an $CO_2$ entspricht dem 1- bis 2-fachen stöchiometrischen Bedarf. Anschließend kann unter Normaldruck oder im Vakuum das Wasser bei Temperaturen von 90 -130°C entfernt werden. Das ausgefallene Salz wird abfiltriert, wobei gegebenenfalls auch Filterhilfsmittel verwendet werden können. Das so erhaltene Produkt wird gegebenenfalls nochmals entwässert.

Nach einer Restalkaligehaltsbestimmung wird eine hohe Nachneutralisation mittels 60 - 100 % des stöchiometrischen Bedarfs an Oxalsäure vorgenommen und das ausgefallene Salz abfiltriert, wobei gegebenenfalls eine nochmalige Entwässerung vorgeschaltet sein kann.

Das erfindungsgemäße Verfahren soll anhand der folgenden Beispiele noch näher erläutert werden (%-Angaben bedeuten - soweit nicht anderes vermerkt ist - Gew.-%).

Beispiel 1

5.841 g eines Polyethers, aus Glycerin und Butylenoxid (Butox) OH-Zahl 546 mit einer KOH-Menge von 0,5 % wurde bei 90°C mit 290 g Wasser versetzt und 0,5h bei 90°C verrührt, danach mit 13,7 g gasförmigem Kohlendioxid neutralisiert - anschließend Carbonat filtriert - und das Produkt analysiert.

Analysen: Basengehalt: 707 ppm

Wasser: 4,64 %

Anschließend wurde das obige Polyether mit 3,64 g Oxalsäure, 27,6 g Wasser und wie üblich mit Antioxidantien verrührt-, entwässert und filtriert.

Analysen: Basengehalt: 177 ppm
Wassergehalt: 0,05 %

Beispiel 2

6830 g eines Polyethers, aus Zucker, Propylenglykol, Wasser, Propylenoxid (PO) OH-Zahl 470 mit einer KOH-Menge von 0,5 % wurde bei 90°C mit 341,5 g Wasser versetzt und 1h bei 90°C verrührt, danach mit 19,3 g gasförmigem Kohlendioxid neutralisiert, anschließend mit 0,1 % Filterhilfsmittel verrührt, entwässert, Carbonat wurde filtriert und das Produkt analysiert.

Analysen: Basengehalt: 650 ppm
Wassergehalt: -

Anschließend wurde 5322 g des obigen Polyethers mit 23,6 g Wasser, 3,1 g Oxalsäure, 0,1 % Filterhilfsmittel auf Cellulosebasis und wie üblich mit Antioxidantien verrührt, entwässert und filtriert.

Analysen: Basengehalt: 130 ppm
Wassergehalt: 0,06 %

Beispiel 3

5690 g eines Polyethers aus Trimethylolpropan und Propylenoxid (PO), OH-Zahl 380 mit einer KOH-Menge von 0,5 % wurde bei 90°C mit 569 g Wasser versetzt und 1,0h bei 90°C verrührt, danach mit 13,5 g gasförmigem Kohlendioxid neutralisiert, anschließend mit 0,1 % Filterhilfsmittel verrührt entwässert, Carbonat wurde filtriert und das Produkt analysiert.

Analysen: Basengehalt: 477 ppm
Wassergehalt: -

Anschließend wurde 5400 g des obigen Polyethers mit 558,5 g Wasser und 2,44 g Oxalsäure, 0,1 % Filterhilfsmittel und wie üblich mit Antioxidantien verrührt, bei 110°C entwässert und filtriert.

Analysen: Basengehalt: 54 ppm
Wassergehalt: 0,05 %

Beispiel 4

4.500 g einem Polyethers aus Sorbit, Propylenoxid (PO), Ethylenoxid (EO), OH-Zahl 175 mit einer KOH-Menge von 0,4 % wurde bei 90°C mit 45 g Wasser versetzt und 0,5h bei 90°C verrührt, danach mit 8,5 g gasförmigem Kohlendioxid neutralisiert, anschließend mit 0,1 % Filterhilfsmittel auf Cellulosebasis verrührt, entwässert, Carbonat wurde filtriert und das Produkt analysiert.

Analysen: Basengehalt: 75 ppm
Wassergehalt: -

Anschließend wurden 3370 g des obigen Polyethers mit 33 g Wasser und 0,3 g Oxalsäure und wie üblich mit Antioxidantien verrührt, bei 110°C entwässert und filtriert.

Analysen: Basengehalt: 10 ppm
Wassergehalt: 0,06 %

Beispiel 5

3814 g eines Polyethers aus Trimethylolpropan und Propylenoxid (PO), OH-Zahl 380 mit einer KOH-Menge von 0,25 % wurde bei 90°C mit 440 g Wasser versetzt und 0,5 h bei 90°C verrührt, danach mit 8,71 g gasförmigem Kohlendioxid neutralisiert, anschließend mit 0,1 % Filterhilfsmittel auf Basis Cellulose versetzt entwässert, Carbonat wurde filtriert und das Produkt analysiert.

Analysen: Basengehalt: 398 ppm
Wassergehalt: 0,02 %

Anschließend wurden 4513 g des obigen Polyethers mit 225 g Wasser, 2,36 g Phosphorsäure (85 %ig) versetzt und bei 80°C 2 h verrührt entwässert und filtriert. Das Produkt wurde analysiert.

Analysen: Basengehalt: 67,5 ppm
Wassergehalt: 0,07 %

Beispiel 6

5130 g eines Polyethers wie in Beispiel 3 beschrieben wurde mit Kohlendioxid neutralisiert, entwässert und filtriert.

Anschließend wurden 4000 g Polyether mit 2,06 g Weinsäure (gelöst in 40 g Wasser) und wie üblich mit Antioxidantien versetzt und bei 98°C 1 h verrührt, entwässert und filtriert. Das Produkt wurde analysiert.

Analysen: Basengehalt: 150 ppm
Wassergehalt: 0,05 %

**Ansprüche**

1. Verfahren zur Entfernung von basischen Katalysatoren aus Polyether-Polyolen mit OH-Zahlen von 4 bis 800 durch Hydrolyse des alkalischen Alkoholats, Einleiten von $CO_2$ und Abfiltrieren des gebildeten Carbonats und anschließende Neutralisation des Polyether-Polyols, dadurch gekennzeichnet, daß die Hydrolyse des Alkoholats mit 0,7 bis 10 Gew.-% Wasser (bezogen auf Polyether-Polyol) bei 25 bis 120°C durchgeführt und anschließend $CO_2$ in etwa 1- bis 2-facher stöchiometrischer Menge bei einer Temperatur von 75 bis 120°C eingeleitet, das gebildete Carbonat abfiltriert und das Polyether-Polyol mit anorganischen und/oder organischen Säuren nachneutralisiert wird.

2. Verfahren nach Anspruch 1, dadurch gekennzeichnet, daß als Säure Oxalsäure eingesetzt wird.

3. Verfahren nach Anspruch 1 oder 2, dadurch gekennzeichnet, daß die Hydrolyse bei Temperaturen von 75 bis 120°C durchgeführt wird.

4. Verfahren nach einem der Ansprüche 1 bis 3, dadurch gekennzeichnet, daß das $CO_2$ bei Temperaturen von 80 bis 95°C eingeleitet wird.

5. Verfahren nach einem der Ansprüche 1 bis 4, dadurch gekennzeichnet, daß beim Abfiltrieren des gebildeten Carbonats zusätzlich Filterhilfsmittel eingesetzt werden.